# EUROPÄISCHE PATENTANMELDUNG

(11) **EP 0 868 099 A2**
(43) Veröffentlichungstag der Anmeldung: **30.09.1998**
(21) Anmeldenummer: 98105334.1
(22) Anmeldetag: 24.03.1998
(51) Int. Cl.: H04Q 3/66

(54) **Verfahren zum Ermitteln eines innerhalb von zwei sich überlappenden Kommunikationsnetzen verlaufenden Leitwegs einer aufzubauenden Verbindung**

(30) Priorität: 27.03.1997 DE 19713167
(71) Anmelder: SIEMENS AKTIENGESELLSCHAFT, 80333 München (DE)
(72) Erfinder: Hummel, Heinrich, 85232 Günding (DE)

(57) **Zusammenfassung**

Zum Ermitteln des Leitwegs einer zu einem Zielnetzknoten (T_{Z}) aufzubauenden Verbindung, die aus einem ersten Kommunikationsnetz (P) über eine Netzübergangsstelle in ein zweites, den Zielnetzknoten (T_{Z}) enthaltendes Kommunikationsnetz (T) führt, werden zunächst unter Verwendung des Dijkstra-Algorithmus die Abstände möglicher Netzübergangsstellen zum Zielnetzknoten (T_{Z}) anhand der Netzkantenlängen des zweiten Kommunikationsnetzes (T) bestimmt. Anschließend wird diejenige Netzübergangsstelle (P_{N}, T_{N}) für den Leitweg ausgewählt, die gemäß einer Gebührenentfernungszonenabstufung des zeiten Kommunikationsnetzes (T) in der billigsten verfügbaren Gebührenentfernungszone zum Zielnetzknoten (T_{Z}) liegt.

## Beschreibung

Die Erfindung betrifft ein Verfahren zum Ermitteln eines innerhalb von zwei sich überlappenden Kommunikationsnetzen verlaufenden Leitwegs einer aufzubauenden Verbindung nach dem Oberbegriff des Patentanspruchs 1.

Sich zumindest teilweise überlappende Kommunikationsnetze, die gemeinsam einen Kommunikationsnetzverbund bilden, wobei Verbindungen mit Netzübergang von einem Kommunikationsnetz zum anderen Kommunikationsnetz geführt werden, sind u.a. in Form von Mobilfunknetzen und mit diesen überlappenden stationären Netzen oder in Form von Privatnetzen bzw. Firmennetzen und Mobilfunknetzen oder stationären Netzen bekannt. Hierbei werden in zunehmendem Maße Privatnetze auch für jedermann zugänglich, beispielsweise Privatnetze von Diensteanbietern, die ein privates Kommunikationsnetz für Langstreckenzwecke zur Verfügung stellen und den Peripheriebereich von öffentlichen Kommunikationsnetzen nutzen. Die vorliegende Erfindung betrifft nun den Fall, daß ein Verbindungsaufbau von einem in einem ersten Kommunikationsnetz angeschlossenen Endgerät zu einem in einem zweiten Kommunikationsnetz angeschlossenen Endgerät vorgenommen werden soll. Außerdem betrifft die Erfindung den Fall, daß eine Verbindung aus irgendeinem Kommunikationsnetz in ein erstes Kommunikationsnetz aufgebaut wird, innerhalb dieses ersten Kommunikationsnetzes ein Leitweg gesucht wird zu einer Netzübergangsstelle in ein zweites Kommunikationsnetz, um dann innerhalb des zweiten Kommunikationsnetzes einen Leitweg über einen Zielvermittlungsknoten zu einem Adressaten zu führen.

Es ist möglich, bei einem aufzubauenden Ruf von einem Privatnetz zu einem öffentlichen Netz bei dem Ermitteln des Leitwegs innerhalb des Privatnetzes möglichst nahe an den Zielnetzknoten des öffentlichen Netzes heranzugehen und somit eine Netzübergangsstelle anhand einer vorliegenden Netzknotentopologie des Privatnetzes mit Hilfe der E.164-Adresse des Zielnetzknotens eine Netzübergangsstelle zu ermitteln. Eine solche Vorgehensweise ist jedoch nicht nach Kostengesichtspunkten optimiert. Dies kann dazu führen, daß der Leitweg auf einer relativ großen Strecke innerhalb des Privatnetzes verläuft und trotzdem an den Netzbetreiber des öffentlichen Netzes die Gebühr für eine Fernverbindung berechnet werden muß.

Aufgabe der vorliegenden Erfindung ist es, ein kostengünstiges Verfahren zum Ermitteln des Leitwegs und zum Ermitteln des Netzübergangs anzugeben.

Die Erfindung löst diese Aufgabe durch ein Verfahren mit den Merkmalen des Anspruches 1.

Erfindungsgemäß hat ein Verfahren zum Ermitteln des Leitwegs einer zu einem Zielnetzknoten aufzubauenden Verbindung innerhalb eines Kommunikationsnetzverbundes, wobei die Verbindung einen Netzübergang zwischen einem ersten Kommunikationsnetz und einem zweiten, mit dem ersten überlappenden Kommunikationsnetz mit einer Vielzahl von Netzknoten und zwischen diesen Netzknoten verlaufenden Netzkanten vorsieht und der Zielnetzknoten im zweiten Kommunikationsnetz liegt,folgende Verfahrensschritte:
Ermitteln möglicher Netzübergangsstellen und deren Abstand zum Zielknoten mit Hilfe des Dijkstra-Algorithmus unter Berücksichtigung der Netzkantenlangen des zweiten Kommunikationsnetzes, wobei Netzknoten des ersten Kommunikationsnetzes gemäß ihrem Aufenthaltsort Netzknoten des zweiten Kommunikationsnetzes zugeordnet werden; und
Auswahl der Netzübergangsstelle für den Leitweg, die gemäß einer Gebührenentfernungszonenabstufung des zweiten Kommunikationsnetzes in der billigsten verfügbaren Gebührenentfernungszone zum Zielnetzknoten liegt.

Eine günstige Ausgestaltungsform eines solchen Verfahrens sieht vor, zum Ermitteln des Leitwegs, insbesondere zum Ermitteln möglicher Netzübergangsstellen, zusätzlich zum Abstand zum Zielknoten im zweiten Kommunikationsnetz auch unter Berücksichtigung der Netzkantenlängen des ersten Kommunikationsnetzes die Leitweglänge im ersten Kommunikationsnetz zu berücksichtigen und die Netzübergangsstelle für den Leitweg auszuwählen, die die billigste verfügbare Gebührenentfernungszone zum Zielnetzknoten hat. Von mehreren möglichen Netzübergangsstellen der bezüglich des Zielnetzknotens selben Gebührenentfernungszone wird der kürzeste Leitweg innerhalb des ersten Kommunikationsnetzes ausgewählt.

Eine andere Ausgestaltungsform eines erfindungsgemäßen Verfahrens zum Ermitteln des Leitwegs sieht vor, zum Ermitteln möglicher Netzübergangsstellen zusätzlich zum Abstand zum Zielknoten im zweiten Kommunikationsnetz auch die Anzahl der vom Leitweg tangierten Netzknoten im ersten Kommunikationsnetz zu berücksichtigen. Es wird die Netzübergangsstelle für den Leitweg ausgewählt, die die billigste verfügbare Gebührenentfernungszone zum Zielnetzknoten hat und von mehreren möglichen Netzübergangsstellen der bezüglich des Zielnetzknotens selben Gebührenentfernungszone den kürzesten Leitweg innerhalb des ersten Kommunikationsnetzes tangiert.

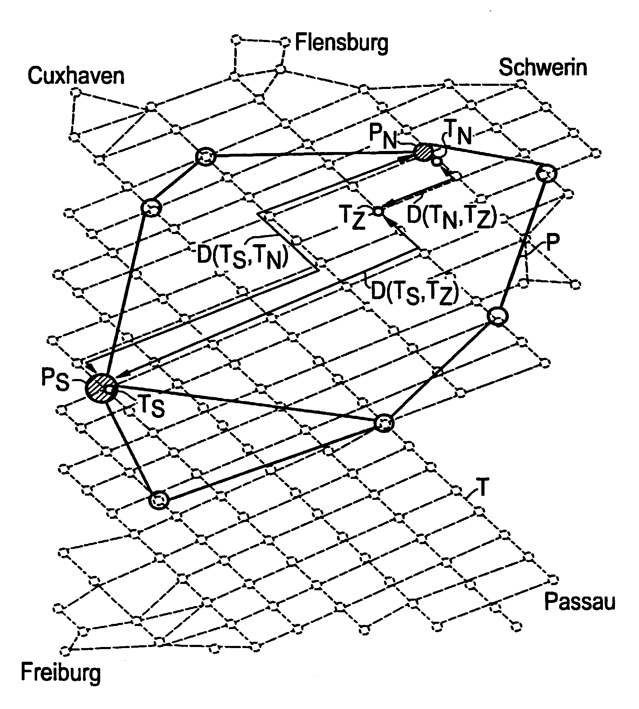

Nachfolgend wird die Erfindung unter Bezugnahme auf die Figur anhand eines speziellen Ausführungsbeispiels erläutert:

Die Figur zeigt ein das öffentliche deutsche Kommunikationsnetz repräsentierendes Kommunikationsnetz, dem ein Privatnetz überlagert ist, in schematischer Darstellung.

In der Figur ist ein das öffentliche deutsche Kommunikationsnetz repräsentierendes, aus 690 stellvertretenden Netzknoten bestehendes Kommunikationsnetz T (strichliert) angedeutet, dem ein (durchgezogen gezeichnetes) Privatnetz P überlagert ist. Von den 690 stellvertretenden Netzknoten ist der Übersichtlichkeit halber nur ein kleiner Teil in der Figur abgebildet. Exemplarisch sind die Netzknoten der Orte Cuxhaven, Flensburg, Schwerin, Freiburg und Passau eingezeichnet.

Zur Verringerung des zur Leitwegbestimmung nötigen Aufwandes wird das öffentliche Kommunikationsnetz auf das repräsentative Kommunikationsnetz T reduziert, dessen 690 stellvertretende Netzknoten aus den etwa 5100, durch Ortsvorwahlnummern anwählbaren Netzknoten bzw. Orten des öffentlichen deutschen Kommunikationsnetzes ausgewählt sind. Die 690 stellvertretenden Netzknoten sind derart gewählt, daß jede deutsche Ortsvorwahlnummer entweder identisch mit der Ortsvorwahlnummer eines dieser stellvertretenden Netzknoten ist oder sich nachbarschaftlich einem solchen zuordnen läßt. Der Leitweg von einem beliebigen Netzknoten des vollständigen öffentlichen Kommunikationsnetzes zu dessen zugeordneten Netzknoten des repräsentativen Kommunikationsnetzes T ist im allgemeinen kurz genug, um bei einer Leitwegoptimierung vernachlässigt werden zu können. Es genügt daher in der Regel, das erfindungsgemäße Verfahren auf das repräsentative Kommunikationsnetz T anzuwenden.

Bei den 690 stellvertretenden Netzknoten handelt es sich in Westdeutschland
um die drei Städte mit 2-ziffriger Vorwahl (München, Frankfurt und Hamburg),
um die Städte mit 3-ziffriger Vorwahl
sowie um die Städte mit 4-ziffriger Vorwahl, wobei die letzte Ziffer eine 1 ist,
und in Ostdeutschland
um die eine Stadt mit 2-ziffriger Vorwahl (Berlin),
um die 14 Städte mit 3-ziffriger Vorwahl und
um die 216 Städte mit 4-ziffriger Vorwahl.

Die Stellenzahlangaben für die Vorwahlen verstehen sich hier und im folgenden jeweils ohne führende Null.

Zwischen je zwei Netzknoten Tᵢ und Tⱼ des repräsentativen Kommunikationsnetzes T, wird Länge des kürzesten Leitwegs D(Tᵢ, Tⱼ) für alle i, j mit 1 <= i, j <= 690 mittels des Dijkstra-Algorithmus berechnet und abgespeichert. Diese Berechnung muß für jede Netzkonfiguration nur einmal durchgeführt werden.

Weiterhin werden für alle Netzknoten P₁,..., Pₘ des Privatnetezes P, wobei m die Anzahl dieser Netzknoten angibt, die diesen zugeordneten Netzknoten T_{P1},..., T_{Pm} des repräsentativen Kommunikationsnetzes T bestimmt und diese Information ebenfalls abgespeichert.

Ausgehend von einem Startknoten P_{S} des Privatnetzes soll nun ein Privatnetzknoten P_{N} zu dem ein Leitweg geführt werden soll, um dort über den Netzknoten T_{N} ins repräsentative Kommmunikationsnetz T zu wechseln und von da zu einem Zielknoten T_{Z} im repräsentativen Kommmunikationsnetz T zu gelangen, so bestimmt werden, daß der im repräsentativen Kommmunikationsnetz T verlaufende Anteil des Leitwegs minimiert wird. Als Zielknoten T_{Z} ist vorher der dem eigentlichen Zielknoten im öffentlichen Kommunikationsnetz zugeordnete, stellvertretende Netzknoten im repräsentativen Kommunikationsnetz T zu bestimmen. Von diesem wird der (kurze) Leitweg zum eigentlichen Zielknoten, dann unabhängig von der erfindungsgemäßen Leitwegbestimmung, weitergeführt.

Die Leitwegbestimmung ist ausgehend von einer beim Startknoten P_{S} eingegebenen Ziffernfolge durchzuführen, die sich aus der Ortsvorwahlnummer des eigentlichen Zielknotens im öffentlichen Kommunikationsnetz und der Rufnummer eines anzurufenden Teilnehmers zusammensetzt. Bevor ein Leitweg bestimmt werden kann, muß zunächst der eigentliche Zielknoten und daraus der stellvertretende Zielknoten T_{Z} über die im eingegebenen Ziffernstring enthaltene Ortsvorwahlnummer bestimmt werden. Dies wird dadurch erschwert, daß Ortsvorwahlnummern unterschiedliche Längen aufweisen und in der eingegebenen Ziffernfolge nicht von der Rufnummer des Teilnehmers abgegrenzt sind. Zunächst ist daher der Anteil bzw. die Stellenzahl der Ortsvorwahlnummer in der eingegeben Ziffernfolge zu bestimmen:

Ortsvorwahlnummern beginnen mit einer 0, gefolgt 2, 3, 4 oder 5 Ziffern. Die erste Ziffer einer Ortsvorwahlnummer nach der einleitenden 0 wird nachfolgend mit digit1 bezeichnet, die zweite mit digit2 usw. bis zur fünften, die mit digit5 bezeichnet wird. Weiterhin werden mit digit12, digit123, digit1234 und digit12345 die jeweiligen Teilziffernfolgen bezeichnet, die aus den der einleitenden 0 nachfolgenden 2, 3, 4 bzw. 5 Ziffern bestehen.

Zunächst werden die ostdeutschen Ortsvorwahlnummern betrachtet. Diese sind durch digit1 = 3 gekennzeichnet. Ihre Länge läßt sich wie folgt bestimmen:
Falls digit12 = 30 ist, handelt es sich um Berlin und die Ortsvorwahlnummer ist 2-ziffrig.
Falls ansonsten digit3 = 1 oder digit3 = 5 ist, so ist die Ortsvorwahlnummer 3-ziffrig.
Für alle übrigen ostdeutschen Ortsvorwahlnummern kann die Stellenzahl anhand untenstehender Tabelle L4Or5Tbl(k) mit 0 <= k <= 69, festgestellt werden. Nach dem Kommentarzeichen 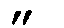 //" sind dabei die Tabellenwerte jeweils noch in Binärdarstellung angegeben, außer falls die einem Tabelleneintrag zugeordnete Ortsvorwahlnummer nicht vergeben oder 3-ziffrig ist. Im Falle von 3-ziffrigen Ortsvorwahlnummern sind die zugehörigen Orte aufgeführt.

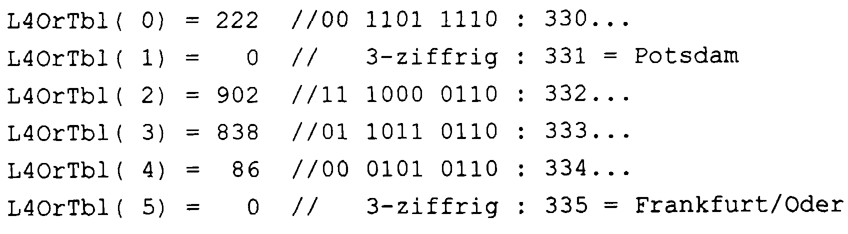

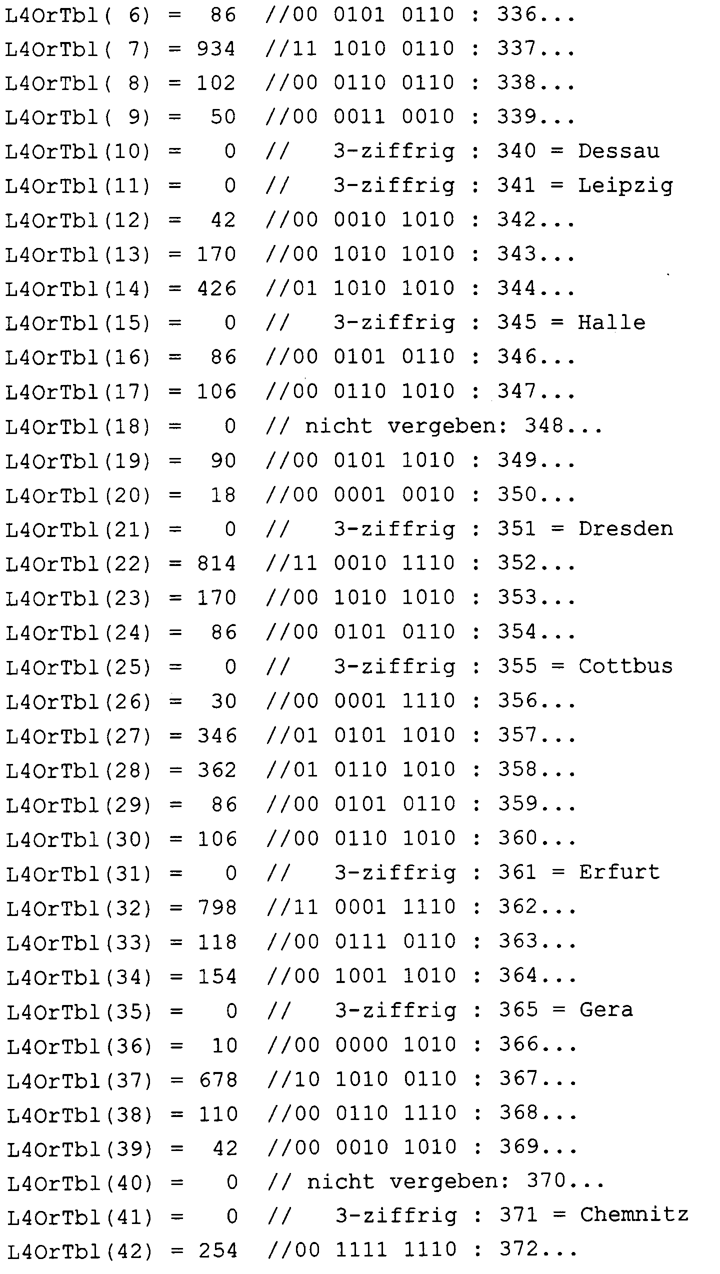

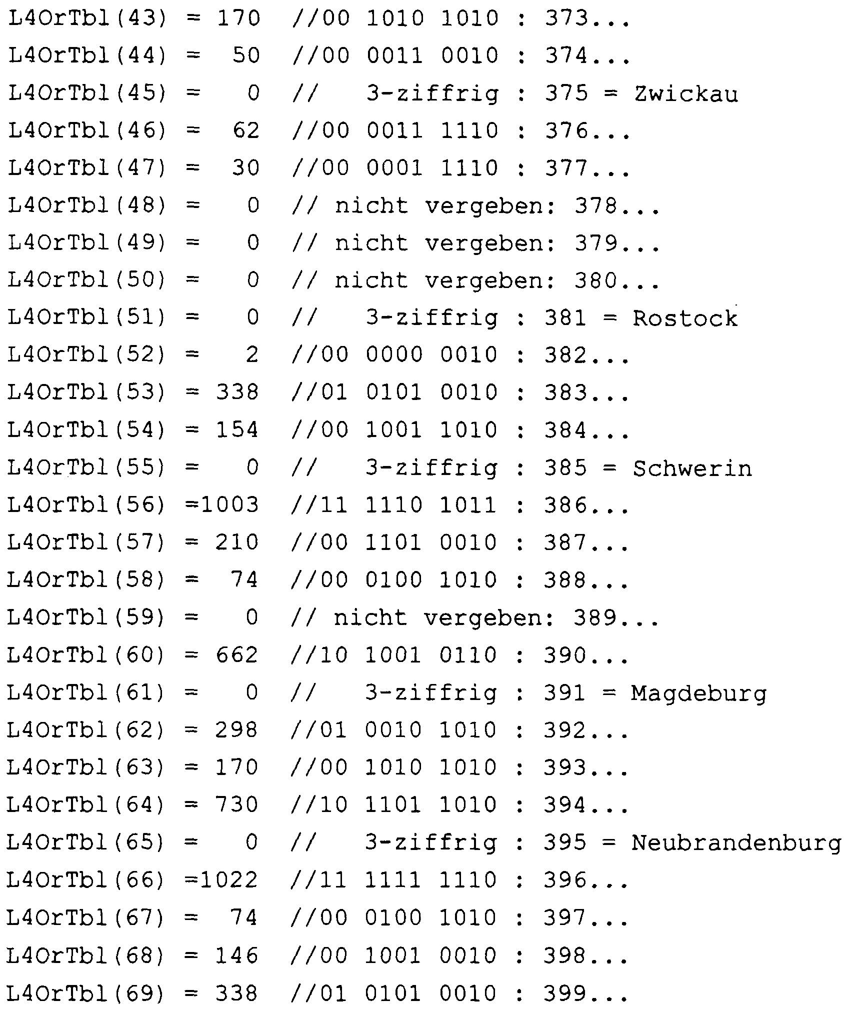

Zur Bestimmung der Länge einer durch die oben angegebenen Kriterien für 2- und 3-ziffrige Ortsvorwahlnummern noch nicht erfaßten ostdeutschen Ortsvorwahlnummer ist die Hilfsvariable x = L4Or5Tbl(digit123 - 330) zu betrachten. Diese ist als Binärzahl aufzufassen, wobei die einzelnen Bitpositionen beginnend mit dem niederwertigsten Bit von 0 an durchnumeriert werden.
Falls x = 0 ist, ist die Ortsvorwahlnummer 3-ziffrig.

Im anderen Fall ist die Ortsvorwahlnummer 4-ziffrig, falls das digit4-te Bit von x gesetzt, d.h. gleich 1, ist, ansonsten 5-ziffrig.

Die Länge von westdeutschen Ortsvorwahlnummern ergibt sich schließlich wie folgt:
Falls digit12 = 89, 69 oder 40 ist, ist die Ortsvorwahlnummer 2-ziffrig.
Falls ansonsten digit3 = 1 oder digit123 = 202, 203, 208, 209, 212 oder 906 ist, so ist die Ortsvorwahlnummer 3-ziffrig.
In allen anderen Fällen ist die Ortsvorwahlnummer 4-ziffrig.

Mit der Feststellung der exakten Länge einer Ortsvorwahlnummer ist diese aus der eingegebenen Ziffernfolge eindeutig bestimmt und damit auch der eigentliche Zielknoten im öffentlichen Kommunikationsnetz. Daraus ist nun der diesem zugeordnete, stellvertretende Netzknoten T_{Z} des repräsentativen Kommunikationsnetzes T zu ermitteln.

Im einfachsten Fall ist der eigentliche Zielknoten bereits mit einem Netzknoten des repräsentativen Kommunikationsnetzes T identisch. Dies gilt nicht, falls die Ortsvorwahlnummer eines eigentlichen Zielknotens in Ostdeutschland 5-ziffrig ist oder in Westdeutschland 4-ziffrig, wobei die letzte Ziffer ungleich 1 ist. In diesem Fall wird der eigentliche Zielknoten wie folgt einem Zielknoten T_{Z} des repräsentativen Kommunikationsnetzes T zugeordnet:

Ein eigentlicher Zielknoten in Ostdeutschland mit 5-ziffriger Ortsvorwahlnummer wird demjenigen stellvertretenden Netzknoten des repräsentativen Kommunikationsnetzes T zugeordnet, dessen Ortsvorwahlnummer in den ersten drei Ziffern mit der Ortsvorwahlnummer des eigentlichen Zielknotens übereinstimmt und sich hinsichtlich der vierten Ziffer arithmetisch am wenigsten unterscheidet.

Ein eigentlicher Zielknoten in Westdeutschland mit 4-ziffriger Ortsvorwahlnummer, wobei die dritte Ziffer ungleich 0 und die letzte Ziffer größer 1 ist, wird demjenigen stellvertretenden Netzknoten des repräsentativen Kommunikationsnetzes T zugeordnet, dessen Ortsvorwahlnummer in den ersten drei Ziffern mit der Ortsvorwahlnummer des eigentlichen Zielknotens übereinstimmt und als vierte Ziffer eine 1 hat.

Ein eigentlicher Zielknoten in Westdeutschland mit 4-ziffriger Ortsvorwahlnummer, wobei die dritte Ziffer eine 0 ist, wird demjenigen stellvertretenden Netzknoten des repräsentativen Kommunikationsnetzes T zugeordnet, dessen Ortsvorwahlnummer 3-ziffrig ist, in den ersten beiden Ziffern mit der Ortsvorwahlnummer des eigentlichen Zielknotens übereinstimmt und als dritte Ziffer eine 1 hat.

Schließlich sind einige Orte nicht nach obiger Vorschrift über ihre Ortsvorwahlnummern einem Knoten des repräsentativen Kommunikationsnetzes T korrekt zuordenbar. Diese Fälle sind gesondert abzufragen. Betroffen sind Nachbarorte von Düsseldorf, Leverkusen-Opladen, Köln, Bonn, Dortmund, Bochum, Aachen, Kall, Münster, Koblenz, Siegen, Wesel, Meschede, Hamburg, Bremen, Kiel, Neumünster, Oldenburg, Lübeck, Flensburg, Bremerhaven, Heide, Holst, Itzehoe, Leer, Ostfriesland, Hannover, Hildesheim, Celle, Bielefeld, Paderborn, Braunschweig, Osnabrück, Göttingen, Herzberg am Harz, Kassel, Uelzen, Lüchow Niedersachsen, Friedberg Hessen, Aschaffenburg, Frankfurt am Main, Mainz, Mannheim, Kaiserslautern, Gießen, Limburg an der Lahn, Trier, Bitburg, Fulda, Bad Hersfeld, Bad Kreuznach, Saarbrücken, Reutlingen, Heilbronn am Neckar, Stuttgart, Karlsruhe, Ulm, Rottweil, Horb am Neckar, Ravensburg, Freiburg im Breisgau, Donaueschingen, Waldshut-Tiengen, Offenburg, Schwäbisch-Hall, Augsburg, Kempten, Memmingen, Ingolstadt, Passau, Traunstein, Weilheim Oberbayern, Landshut, Donauwörth, Nürnberg, Bayreuth, Hof an der Saale, Würzburg, Kitzingen, Regensburg, Bamberg, Weiden, Bad Kissingen, Ansbach, Deggendorf, München, Frankfurt und Hamburg.

Nachdem der Zielknoten T_{Z} im repräsentativen Kommunikationsnetz T ermittelt ist, kann nun ein optimaler Leitweg dorthin bestimmt werden.

Zu diesem Zweck werden die Distanzen D(T_{P1}, T_{Z}),..., D(_{Pm}, T_{Z}) des Zielknotens T_{Z} zu allen den Netzknoten P₁,..., Pₘ des Privatnetzes P zugeordneten Netzknoten T_{P1},..., T_{Pm} des repräsentativen Kommunikationsnetzes T verglichen und so derjenige Netzknoten T_{N} bzw. P_{N} bestimmt, der die kleinste Distanz D(T_{N}, T_{Z}) = min{ D(T_{P1}, T_{Z}),..., D(T_{Pm}, T_{Z}) } zum Zielknoten T_{Z} aufweist.

Im öffentlichen Kommunikationsnetz sind die Verbindungsgebühren nach Entfernungszonen gestaffelt. Diese Gebühren bestimmen sich somit im Ausführungsbeispiel durch die Entfernung, die der im öffentlichen Kommunikationsnetz T verlaufende Anteil des Leitweges überbrückt. Falls die Distanz D(T_{N}, T_{Z}) in eine kostengünstigere Entfernungszone als die überbrückte Distanz D(T_{PS}, T_{Z}) eines vollständig im öffentlichen Kommunikationsnetz T verlaufenden Leitweges von P_{S} zu T_{Z} fällt, wird deshalb der Leitweg vom Startknoten P_{S} über den ermittelten Privatnetzknoten P_{N} geführt, um dort über den Netzknoten T_{N} in das öffentliche Kommunikationsnetz zu wechseln. Falls dagegen auf diese Weise keine Verbesserung hinsichtlich der Entfernungszone erzielt werden kann, wird gleich beim Startknoten P_{S} in das öffentliche Kommunikationsnetz gewechselt.

Die mittels des Dijkstra-Algorithmus ermittelten Distanzinformationen D(Tᵢ,Tⱼ) und das oben beschriebene Verfahren zur Analyse einer Ortsvorwahlnummer können außer zur Leitwegbestimmung auch dazu verwendet werden, die Gebührenberechnung beim öffentlichen Kommunikationsnetz T zu verfeinern. Eine Vergebührung kann damit auf der Grundlage der von einer Verbindung von Tᵢ zu Tⱼ tatsächlich überbrückten Entfernung D(Tᵢ,Tⱼ) durchgeführt werden anstatt, wie bisher, auf den Umstand, ob Fernleitungen mitbenutzt werden.

## Patentansprüche

1. Verfahren zum Ermitteln des Leitwegs einer zu einem Zielnetzknoten (T_{Z}) aufzubauenden Verbindung innerhalb eines Kommunikationsnetzverbundes, wobei die Verbindung einen Netzübergang zwischen einem ersten Kommunikationsnetz (P) und einem zweiten, mit dem ersten überlappenden Kommunikationsnetz (T) mit einer Vielzahl von Netzknoten und zwischen diesen Netzknoten verlaufenden Netzkanten vorsieht und der Zielnetzknoten (T_{Z}) im zweiten Kommunikationsnetz (T) liegt, unter Verwendung des Dijkstra-Routing-Algorithmus, **gekennzeichnet** durch Ermitteln möglicher Netzübergangsstellen und deren Abstand zum Zielnetzknoten (T_{Z}) mit Hilfe des Dijkstra-Algorithmus unter Berücksichtigung der Netzkantenlängen des zweiten Kommunikationsnetzes (T), wobei Netzknoten des ersten Kommunikationsnetzes (P) gemäß ihrem Aufenthaltsort Netzknoten des zweiten Kommunikationsnetzes (T) zugeordnet werden, und durch Auswahl der Netzübergangsstelle (P_{N}, T_{N}) für den Leitweg, die gemäß einer Gebührenentfernungszonenabstufung des zweiten Kommunikationsnetzes (T) in der billigsten verfügbaren Gebührenentfernungszone zum Zielnetzknoten (T_{Z}) liegt.

2. Verfahren zum Ermitteln des Leitwegs nach Anspruch 1, wobei zum Ermitteln möglicher Netzübergangsstellen zusätzlich zum Abstand zum Zielnetzknoten (T_{Z}) im zweiten Kommunikationsnetz (T) auch unter Berücksichtigung der Netzkantenlängen des ersten Kommunikationsnetzes (P) die Leitweglänge im ersten Kommunikationsnetz (P) berücksichtigt wird und die Netzübergangsstelle (P_{N}, T_{N}) für den Leitweg ausgewählt wird, die die billigste verfügbare Gebührenentfernungszone zum Zielnetzknoten (T_{Z}) hat und von mehreren möglichen Netzübergangsstellen der bezüglich des Zielnetzknotens (T_{Z}) selben Gebührenentfernungszone den kürzesten Leitweg innerhalb des ersten Kommunikationsnetzes (P) hat.

3. Verfahren zum Ermitteln des Leitwegs nach Anspruch 1, wobei zum Ermitteln möglicher Netzübergangsstellen zusätzlich zum Abstand zum Zielnetzknoten (T_{Z}) im zweiten Kommunikationsnetz (T) auch die Anzahl der vom Leitweg tangierten Netzknoten im ersten Kommunikationsnetz (P) berücksichtigt wird und die Netzübergangsstelle (P_{N}, T_{N}) für den Leitweg ausgewählt wird, die die billigste verfügbare Gebührenentfernungszone zum Zielnetzknoten (T_{Z}) hat und von mehreren möglichen Netzübergangsstellen der bezüglich des Zielnetzknotens (T_{Z}) selben Gebührenentfernungszone den kürzesten Leitweg innerhalb des ersten Kommunikationsnetzes (P) tangiert.
